(19) Europäisches Patentamt
European Patent Office
Office européen des brevets

(11) **EP 4 218 973 A1**

(12) **EUROPEAN PATENT APPLICATION**

(43) Date of publication:
**02.08.2023 Bulletin 2023/31**

(21) Application number: **23153306.8**

(22) Date of filing: **25.01.2023**

(51) International Patent Classification (IPC):
*A63F 13/216* (2014.01)   *A63F 13/35* (2014.01)
*A63F 13/537* (2014.01)   *A63F 13/69* (2014.01)
*A63F 13/795* (2014.01)   *A63F 13/85* (2014.01)

(52) Cooperative Patent Classification (CPC):
**A63F 13/216; A63F 13/35; A63F 13/537;
A63F 13/69; A63F 13/795; A63F 13/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022   GB 202201110**

(71) Applicant: **Sony Interactive Entertainment Europe
Limited
London W1F 7LP (GB)**

(72) Inventor: **Kocdemir, Sahin Serdar
London, W1F 7LP (GB)**

(74) Representative: **Murgitroyd & Company
Murgitroyd House
165-169 Scotland Street
Glasgow G5 8PL (GB)**

(54) **STANDARDIZED LOCATION ID FOR VIRTUAL ENVIRONMENTS**

(57)     A computer-implemented system and method of providing a positioning system for a virtual environment hosted on a platform to enable sharing of content, comprising assigning each location in the virtual environment a unique location ID, receiving a request to retrieve a unique location ID and sharing the unique location ID with an application or an electronic device, wherein each unique location ID is a data string having a standardized format across different platforms comprising a platform identifier, a title identifier, a level identifier and a position identifier.

Fig. 1A

**Description**

BACKGROUND

The present specification relates to virtual environments, such as virtual game worlds. In particular, the present specification provides computer-implemented systems and methods of providing a standardized positioning system, such as a global position system (GPS) for a virtual environment hosted on a platform to enable sharing of content.

Currently, video games that are set in a real location, such as London, can use real world GPS data to define a location within the game, wherein the game is a non-real world environment referred to in the present disclosure as a virtual environment. However, this location data is generally specific to the game engine and to the platform and cannot be easily shared between different platforms or applications.

Virtual environments are not limited to the gaming industry. Indeed, virtual environments are becoming increasingly diverse and are used in many different applications and industries, hosted on a variety of different platforms and services.

SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a computer-implemented method of providing a positioning system for a virtual environment hosted on a platform to enable sharing of content, comprising assigning each location in the virtual environment a unique location ID, receiving a request to retrieve a unique location ID for a location within the virtual environment, and sharing the unique location ID with an application or an electronic device. Each unique location ID is a data string comprising a platform identifier, a title identifier, a level identifier, and a position identifier. The positioning system may be a global positioning system.

Thus, the unique location IDs according to the present disclosure provide a standardized global positioning method and system for virtual worlds that can be used across different platforms and devices. Defining a standardized global position as a single identifier within a gaming platform would enable developers to use improved tools and enhance gameplay experience players.

Accurate location data for a virtual environment can be very useful, not just for users but for developers and technicians. For example, the method may include embedding the unique location ID in a crash report or other notification indicating a possible problem at the specific location within the virtual environment. As the unique location ID is standardized and can be shared easily with different applications, not only does the unique location ID provide clear information regarding the platform, game title, level and specific position within the virtual environment that can be used to locate and (hopefully) diagnose the issue, this information can be accessed on a wide range of different applications.

The term unique location ID and unique location identifier may be used interchangeably throughout this disclosure.

It will be appreciated that the application may be any computer-implemented application hosted on the same electronic device as the virtual environment, or a different electronic device to the device hosting the virtual environment.

It will be appreciated that the electronic device may be any kind of electronic device, such as (but not limited to) a gaming console, a computer (e.g., a PC), a smart phone or a tablet.

Sharing the unique location ID may equivalently be referred to in this disclosure as outputting the unique location ID or providing the unique location ID to the application or electronic device.

The platform identifier defines the platform that is hosting the virtual environment. For example, the platform identifier may define whether the virtual environment is hosted by an Xbox®, a PlayStation® 4 or 5, a PC, an android mobile app, an apple mobile app, etc.

The title identifier defines a title or name of the virtual environment, for example the title of the game.

In some virtual environments there are a plurality of levels that the user can progress through (this is particularly applicable to the gaming industry). Thus, the level identifier defines which level of the virtual environment the user is currently in or on. Optionally, user generated levels may be supported by assigning unique level identifiers to each user generated level.

The position identifier defines the position of the user within the given level of the virtual environment. Optionally, the position identifier may be an array of co-ordinates.

Optionally, the unique location ID is defined using the following cascaded string: [platform identifier]/[title identifier]/[level identifier]/[position identifier]

Optionally, the method may further comprise monitoring the location of a user within the virtual environment. The method may include recording or storing a unique location ID corresponding to the user's location within the virtual environment. The user's location ID may be temporarily stored, for example in a data buffer. Optionally, the user's location ID may be stored in a memory.

Optionally, the method may include periodically updating the stored or recorded unique location ID to correspond to the user's current location within the virtual environment. For example, the method may comprise updating the unique location ID after a predetermined time interval has expired.

Optionally, the method may include continuously updating the stored or recorded unique location ID to correspond to the user's current location within the virtual environment.

Optionally, the method may only update the unique location ID upon receipt of a request or instruction to do so.

Optionally, receiving a request to retrieve a unique location ID for a given location within the virtual environment comprises receiving a request to retrieve the unique location ID corresponding to the user's current location within the virtual environment.

Sharing the unique location ID with an application or an electronic device may comprise receiving or capturing a video of the virtual environment and sharing the video with the application or electronic device. The method may include embedding in the video the unique location IDs corresponding to the locations in the virtual environment shown in the video.

Optionally, the unique location IDs corresponding to the locations in the virtual environment shown in the video are provided or embedded as an array of unique location IDs, each unique location ID having an associated timestamp.

Optionally, sharing the unique location ID with an application or an electronic device comprises embedding the unique location ID into a crash report or other notification.

Optionally, sharing the unique location ID with an application or an electronic device comprises embedding the unique location ID into a weblink, URL or hyperlink. For example, a weblink with specific unique location ID can be used to launch titles (i.e., games or virtual environments) immediately from that location, which amongst other benefits can conveniently allow a group of users to co-ordinate game play.

The method may further comprise providing a screenshot of the virtual environment at the given location. Outputting the unique location ID to an application or an electronic device may comprise embedding the unique location ID into a saved screenshot file.

Optionally, the unique location ID is embedded into an Exif or a comment data section of the saved screenshot file.

Optionally, a screenshot viewer is configured to read the embedded unique location ID from the saved screenshot file.

Optionally, the screenshot viewer is configured to request visualisation parameters from the platform based on the unique location ID.

Optionally, the screenshot viewer is configured to render the location within the virtual environment where the screenshot was taken, using the visualisation parameters.

The method may further include sharing with the application or the electronic device visualisation data representing the given location in the virtual environment together with the unique location ID. The visualization data (e.g. a 3D mesh of at least a portion of the virtual world including the location of the unique location ID) can be used on the platform side (i.e. by an internal application or software), or by external applications.

Optionally, the visualisation data comprises a 3D mesh of at least a portion of a level of the virtual environment associated with the level identifier in the unique location ID.

The virtual environment can be any kind of virtual environment and is not limited to computer games or virtual reality games. Optionally, the virtual environment is a 2D or 3D virtual world or a metaverse.

According to another aspect, the present invention provides a system, comprising a processor and memory including executable instructions that, as a result of execution by the processor, causes the system to perform the computer-implemented method of any embodiment or example of the first aspect of the invention.

BRIEF DESCRIPTION OF THE DRAWINGS

Embodiments of this disclosure will be described hereinafter, by way of example only, with reference to the accompanying drawings in which like reference signs relate to like elements and in which:

Figure 1A is a diagram showing a system according to an embodiment of this disclosure;
Figure 1B illustrates a block diagram of one example implementation of a computing device;
Figure 2 is a flowchart showing a method of providing a global positioning system for a virtual environment according to an embodiment of this disclosure;
Figure 3 is a flowchart showing a method of providing a global positioning system for a virtual environment according to another embodiment of this disclosure;
Figure 4 is a flowchart of a method of usage from the game or platform side of the global positioning system according to an embodiment of this disclosure;

Figure 5 is a flowchart of a method of usage from the Screenshot Viewer side of the global positioning system according to an embodiment of this disclosure; and

Figure 6 is a flowchart of another method of usage of the global positioning system according to an embodiment of this disclosure.

DETAILED DESCRIPTION

Embodiments of this disclosure are described in the following with reference to the accompanying drawings.

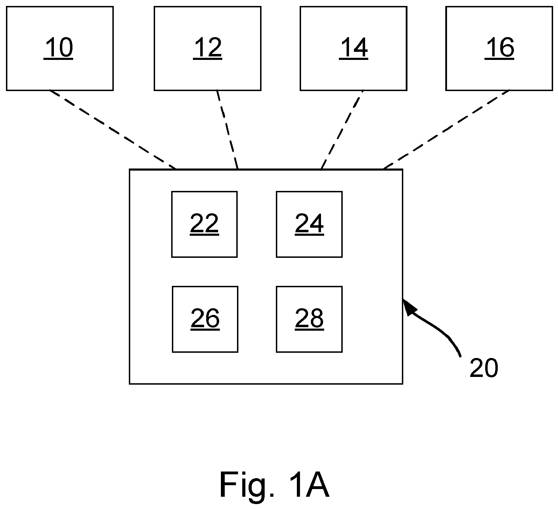

Figure 1A shows a system according to an embodiment of the present disclosure. The system comprises an electronic device 20 comprising at least one processor and memory. The electronic device 20 is configured to communicate directly or indirectly with a plurality of remote or external electronic devices 10, 12, 14 and 16. In some embodiments, the electronic device 20 may be configured to establish a wireless communication channel between one or more of the plurality of electronic devices 10, 12, 14 and 16. Each of the electronic devices may be, but are not limited to, a PC, a gaming console, a tablet or a smart phone.

The electronic device 20 comprises a platform configured to host a virtual environment. The virtual environment may be 2D or 3D. In some embodiments, the virtual environment may be provided by a computer game run on the electronic device 20. In some embodiments, the electronic device 20 may be a gaming console or PC configured to run a computer game that includes a virtual environment for users (i.e., players).

In the embodiment shown in Figure 1A, the electronic device 20 comprises a Location Interface or Location API (Application Programming Interface) 22, a screenshot service 24, a video capture application 26 and a communication unit 28 for communicating with other applications or programs on the electronic device 20 and with external applications or electronic devices 10, 12, 14, 16. It will be appreciated that these features may be provided as software components of the electronic device 20.

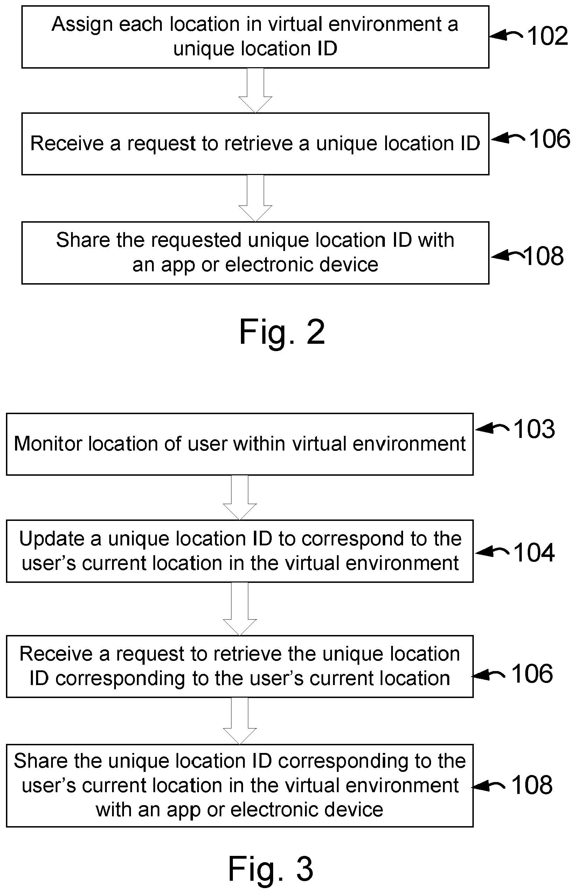

The Location API 22 is discussed in connection with Figure 3. The screenshot servicer 24 is configured to capture a screenshot of the virtual environment (e.g., game) hosted on the electronic device 20. The video capture application 26 is configured to capture a video of the virtual environment.

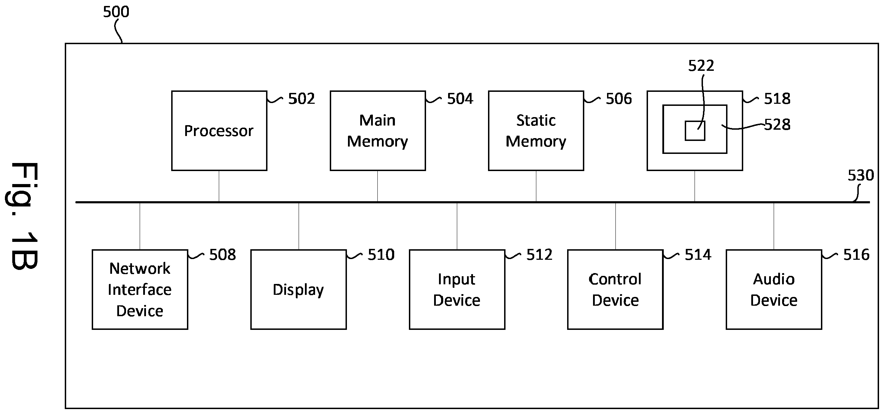

Figure 1B illustrates a block diagram of one example implementation of a computing device 500 that can be used for implementing the method of the present disclosure. The computing device is associated with executable instructions for causing the computing device to perform any one or more of the methodologies discussed herein. The computing device 500 may operate in the capacity of the data model or one or more computing resources for implementing the data model for carrying out the methods of the present disclosure. In alternative implementations, the computing device 500 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 500 includes a processing device 502, a main memory 504 (e.g., read-only memory (ROM), flash memory, dynamic random-access memory (DRAM) such as synchronous DRAM (SDRAM) or Rambus DRAM (RDRAM), etc.), a static memory 506 (e.g., flash memory, static random-access memory (SRAM), etc.), and a secondary memory (e.g., a data storage device 518), which communicate with each other via a bus 530.

Processing device 502 represents one or more general-purpose processors such as a microprocessor, central processing unit, or the like. More particularly, the processing device 502 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 502 may also be one or more special-purpose processing devices such as an application specific integrated circuit (ASIC), a field programmable gate array (FPGA), a digital signal processor (DSP), network processor, or the like. Processing device 502 is configured to execute the processing logic (instructions 522) for performing the operations and steps discussed herein.

The computing device 500 may further include a network interface device 508. The computing device 500 also may include a video display unit 510 (e.g., a liquid crystal display (LCD) or a cathode ray tube (CRT)), an alphanumeric input device 512 (e.g., a keyboard or touchscreen), a cursor control device 514 (e.g., a mouse or touchscreen), and an audio device 516 (e.g., a speaker).

The data storage device 518 may include one or more machine-readable storage media (or more specifically one or more non-transitory computer-readable storage media) 528 on which is stored one or more sets of instructions 522 embodying any one or more of the methodologies or functions described herein. The instructions 522 may also reside, completely or at least partially, within the main memory 504 and/or within the processing device 502 during execution thereof by the computer system 500, the main memory 504 and the processing device 502 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Figure 2 is a flowchart illustrating a method of providing a global positioning system for a virtual environment according to an embodiment of this disclosure. This method may be executed on the system shown in Figure 1A or 1B.

The method comprises assigning each location in the virtual environment a unique location ID (step 102), such that each location or position in the virtual environment corresponds to a given unique location ID. The unique location ID is a data string comprising a platform identifier, a title identifier, a level identifier and a position identifier. The platform identifier defines the platform that is hosting the virtual environment (e.g., PS5®, Xbox® or PC). The title identifier defines the title of the virtual environment (e.g., the name of the computer game). Often, virtual environments comprise different levels, particularly if the virtual environment is part of a computer game. The level identifier defines the level of the virtual environment. The position identifier defines the specific position or location within the level of the virtual environment. Optionally, the position identifier may be a set of co-ordinates.

An example of the formatting of a unique location ID according to the present disclosure is provided below, wherein the unique location ID may be defined by a cascaded data string with the syntax:

$$[PlatformID{:}string]/[TitleID{:}string]/[LevelID{:}string]/[Location{:}array\ of\ real\ values]$$

As would be appreciated by the skilled person, data strings are alphanumeric character arrays with a known maximum length. Optionally, SKU numbers can be used for the title identifier. Optionally, user generated or custom levels can be supported by assigning unique level identifiers for these levels when they are generated.

Thus, the unique location IDs according to the present disclosure have a defined, standardized format that enables sharing of the location IDs between different platforms, applications and electronic devices. Generally, this type of location data for a virtual environment or game is not easily or conveniently shared in this manner. For example, game engines and games can have a custom solution to provide a position for a specific location for their internal tools, such as a game level's file path and 3 numbers (x,y,z) can be used to track where an event has happened. However, another game engine will not understand this data without getting some extra information that is not generally shared, such as (but not limited to) the game's name, platform, level bounds etc. To make a unique shareable location ID, the present disclosure provides a standard format for the data string. In addition, a user (e.g. an application) may be able to query the additional data related to a specific game or level identifier.

The method includes receiving a request to retrieve a unique location ID (step 106). In some embodiments, the method may include receiving a request for a unique location ID corresponding to a specific location in the virtual environment. In some embodiments, the method may include receiving a request for the unique location ID corresponding to the current or most recent location of the user within the virtual environment.

The requested unique location ID may then be shared with either an application or another electronic device (step 108). The unique location ID may be shared as part of a larger data file. Optionally, the unique location ID may be shared via a wireless communication channel. In some embodiments, the unique location ID may be shared in a weblink, hyperlink or URL which can be used to launch the virtual environment immediately from that location (assuming the user has the required permissions).

Figure 3 shows another embodiment of a method according to the present disclosure. The method may include monitoring the location of a user within the virtual environment (step 103). If there are a plurality of users within the same virtual environment, particularly 'local' users hosted on the same electronic device, the method may comprise monitoring the location of each user within the virtual environment.

The method may include recording, registering or storing the unique ID corresponding to the location of the, or each, user in the virtual environment. At step 104, the method includes updating the unique location ID to correspond to the, or each, user's current or most recent location in the virtual environment. In some embodiments, the location of the, or each, user may be continually updated. In some embodiments, the location of the, or each, user may be periodically updated (i.e., after a given time interval).

Step 106 of the method as shown in Figure 3 includes receive a request to retrieve the unique location ID corresponding to the user's current or most recent location within the virtual environment. In some embodiments this request may be a user-initiated request, or a request initiated by an internal application or API or external application or API in communication with the electronic device hosting the virtual world.

Step 108 comprises sharing the unique location ID corresponding to the user's current or most recent location within the virtual environment with an application or an electronic device (internal or external / local or remote).

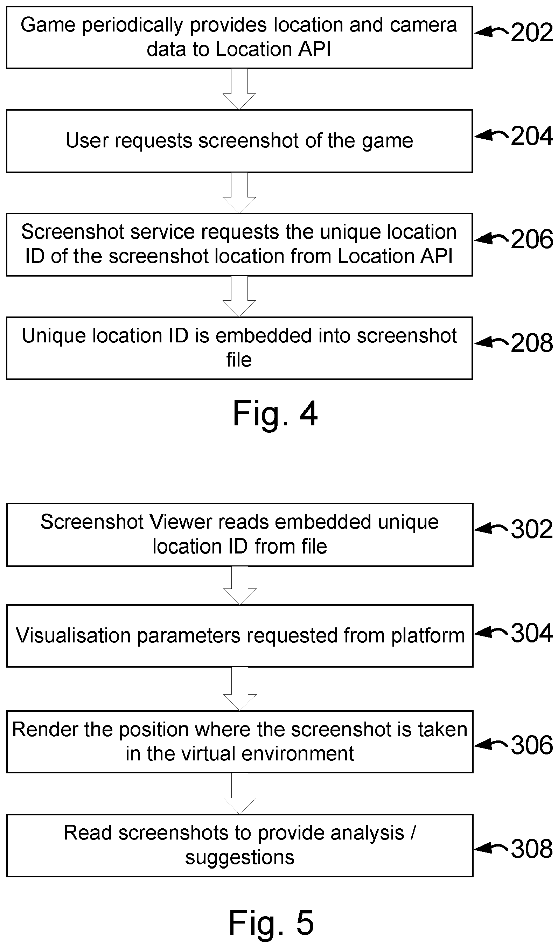

Figure 4 shows a workflow diagram for a usage of the system or method of the present disclosure from the game side. In this embodiment the terms 'game' and 'virtual environment' are used interchangeably. As shown in step 202, the game periodically provides location data and camera data to a Location API 22. The location data preferably includes the current or most recent unique location ID of a user within the game. The camera data may represent one or more properties of a camera that allow a certain view from the camera to be replicated. The camera data might include, but is not limited to, camera orientation, aspect ratio, focal length/field of view angle, eye separation distance for VR and focus distance.

At step 204 the user requests a screenshot of the game (i.e., the virtual environment) at a given location. The given location may be the current location of the user within the game. A screenshot service 24 requests the unique location ID of the screenshot location (within the virtual environment) from the Location API 22 (step 206). The location of the screenshot may correspond to the current location of the user within the game.

At step 208, the screenshot file is saved and the unique location ID representing the location of the screenshot within the virtual environment is embedded into the screenshot file. Preferably, the unique location ID is embedded into the screenshot file in the Exif or comment data section of the screenshot file. Optionally, in some embodiments some or all of the camera data can be saved or embedded into the screenshots file using the Exif or comment data section of the screenshot file.

Figure 5 shows a workflow diagram for a usage of the system or method of the present disclosure from a Screenshot Viewer side following on from the method in Figure 4. The Screenshot Viewer may be on a remote electronic device. At step 302 the Screenshot Viewer receives the screenshot file that is shared by the screenshot service after step 208 in Figure 4. The Screenshot Viewer reads the embedded unique location ID from the screenshot file.

At step 304 the Screenshot Viewer requests visualisation parameters from the platform hosting the virtual environment. The method may include providing visualisation parameters or data to the platform for the virtual environment, for example for each level of the virtual environment. The visualisation parameters or data may comprise a 3D mesh of at least a portion of the virtual environment. As such, the method may include providing standardised visualisation data to the Screenshot Viewer, thereby ensuring consistency and allowing the Screenshot Viewer to improve the visualisation of the virtual environment at the given unique location ID within the screenshot file.

At step 306, the Screenshot Viewer renders the position where the screenshot was taken within the virtual environment, using the unique location ID and the visualisation data provided. This advantageously ensures a consistent visualization of the virtual environment across different tools.

For example, an open world game can provide a low poly version of their map that is accessible by the Location API, and this visualisation data can be used in an external screenshot application or website which will then visualize the position information embedded with the screenshot. In computer graphics, a low poly version is a 3D polygon mesh that has a relatively small number of polygons. Polygon meshes are commonly used to model a 3D object for display by a computer. The more polygons that are present in a mesh the more detailed the object is, but the more computationally intensive it is to display. To decrease render times, low poly meshes are used.

At step 308 the Screenshot Viewer can read the screenshots to provide additional analysis and/or suggestions to the user. For example, the system of the present disclosure may allow applications to search for screenshots from nearby locations within the virtual environment close to the unique location ID of the screenshot. Additionally or alternatively, applications may review the unique location ID data shared by the platform to generate suggestions for hot spot areas within a virtual environment.

Providing standardized location IDs also allows external application to analyse the location information that is shared by the platform, which can provide beneficial analysis and additional features for users. Currently, every game engine or development studio generally create their own tools to embed positional data to their crash notifications or captures to be used later when debugging. With the standardized unique location IDs of the present disclosure it should be possible to develop standardized tools for developers across different platforms that will ease their development processes; such as visualization tools for crash locations, replay comparison on certain locations.

Another use of the unique location IDs of the present disclosure may be sharing location data directly from the game to a modelling tool when reporting issues, such as with the assets or lighting in the virtual environment. This may allow artists to quickly and conveniently locate the issues by clicking on a link containing the unique location ID in the report shared by the platform.

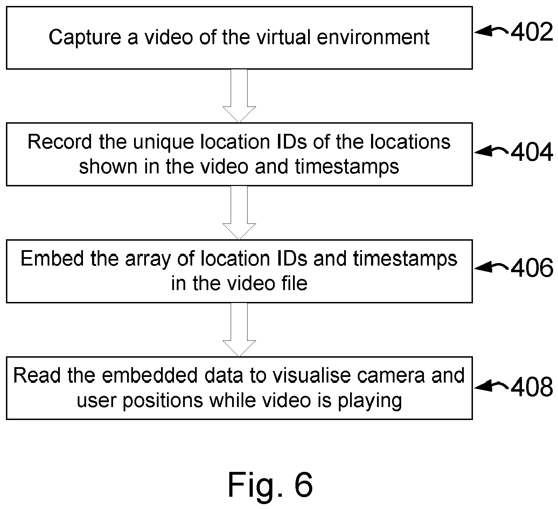

Another method according to the present disclosure is shown in Figure 6. The method comprises capturing a video of the virtual environment (step 402). The method includes recording the unique location IDs of all locations shown in the video, together with the timestamps of when each unique location ID is shown or appears in the video (step 404). As will be appreciated, the camera may move around in the virtual environment while capturing the video, such that multiple location IDs are covered by the video.

At step 406, the method comprises embedding the unique location IDs and timestamps into the video file. Preferably, the unique location IDs are embedded as an array of identifiers with associated timestamps. Thus, the array may conveniently define continuous camera movement within the virtual environment.

The video file may then be shared with an application or electronic device. At step 408, software (e.g., a video player) can read this embedded data to visualise camera and player positions while the video is playing.

Accordingly, there has been described a computer-implemented system and method of providing a GPS for a virtual environment hosted on a platform to enable sharing of content, comprising assigning each location in the virtual environment a unique location ID, receiving a request to retrieve a unique location ID and sharing the unique location ID with an application or an electronic device, wherein each unique location ID is a data string having a standardized format across different platforms comprising a platform identifier, a title identifier, a level identifier and a position identifier.

Although particular embodiments of this disclosure have been described, it will be appreciated that many modifications/additions and/or substitutions may be made within the scope of the claims.

**Claims**

1. A computer-implemented method of providing a positioning system for a virtual environment hosted on a platform to enable sharing of content, comprising:

   assigning each location in the virtual environment a unique location ID;
   receiving a request to retrieve a unique location ID for a location within the virtual environment; and
   sharing the unique location ID with an application or an electronic device,
   wherein each unique location ID is a data string comprising:

      a platform identifier;
      a title identifier;
      a level identifier; and
      a position identifier.

2. The computer-implemented method of claim 1, wherein the unique location ID is defined using the following cascaded string:

$$[\text{platform identifier}]/[\text{title identifier}]/[\text{level identifier}]/[\text{position identifier}]$$

3. The computer-implemented method of claim 1 or claim 2, further comprising:

    monitoring the location of a user within the virtual environment; and
    storing the unique location ID corresponding to the location of the user within the virtual environment.

4. The computer-implemented method of claim 3, further comprising:
   periodically updating the stored unique location ID to correspond to the user's current location within the virtual environment.

5. The computer-implemented method of claim 3 or claim 4, wherein receiving a request to retrieve a unique location ID for a location within the virtual environment comprises receiving a request to retrieve the unique location ID corresponding to the user's current location within the virtual environment.

6. The computer-implemented method of any preceding claim, wherein sharing the unique location ID with an application or an electronic device comprises receiving or capturing a video of the virtual environment and embedding in the video the unique location IDs corresponding to the locations in the virtual environment shown in the video.

7. The computer-implemented method of claim 6, wherein the unique location IDs corresponding to the locations in the virtual environment shown in the video are provided as an array of unique location IDs, each unique location ID within the array having an associated timestamp.

8. The computer-implemented method of any preceding claim, wherein sharing the unique location ID with an application or an electronic device comprises:

    embedding the unique location ID into a crash report or other notification; and/or
    embedding the unique location ID into a weblink or hyperlink.

9. The computer-implemented method of any preceding claim, further comprising providing a screenshot of the virtual environment at the given location, wherein outputting the unique location ID to an application or an electronic device comprises embedding the unique location ID into a saved screenshot file.

10. The computer-implemented method of claim 9, wherein the unique location ID is embedded into an Exif or a comment data section of the saved screenshot file.

11. The computer-implemented method of claim 9 or claim 10, wherein a screenshot viewer is configured to:

    read the embedded unique location ID from the saved screenshot file;
    request visualisation parameters from the platform based on the unique location ID; and
    render the location within the virtual environment where the screenshot was taken, using the visualisation parameters.

12. The computer-implemented method of any preceding claim, further comprising:
    sharing with the application or the electronic device visualisation data representing the location in the virtual environment together with the unique location ID.

13. The computer-implemented method of claim 12, wherein the visualisation data comprises a 3D mesh of at least a portion of a level of the virtual environment associated with the level identifier in the unique location ID.

14. The computer-implemented method of any preceding claim, wherein the virtual environment is a 2D or 3D virtual world or a metaverse.

15. A system, comprising:

a processor; and
memory including executable instructions that, as a result of execution by the processor, causes the system to perform the computer-implemented method of any preceding claim.

Fig. 1A

Fig. 1B

Assign each location in virtual environment a unique location ID — 102

Receive a request to retrieve a unique location ID — 106

Share the requested unique location ID with an app or electronic device — 108

## Fig. 2

Monitor location of user within virtual environment — 103

Update a unique location ID to correspond to the user's current location in the virtual environment — 104

Receive a request to retrieve the unique location ID corresponding to the user's current location — 106

Share the unique location ID corresponding to the user's current location in the virtual environment with an app or electronic device — 108

## Fig. 3

Game periodically provides location and camera data to Location API ◄~202

User requests screenshot of the game ◄~204

Screenshot service requests the unique location ID of the screenshot location from Location API ◄~206

Unique location ID is embedded into screenshot file ◄~208

## Fig. 4

Screenshot Viewer reads embedded unique location ID from file ◄~302

Visualisation parameters requested from platform ◄~304

Render the position where the screenshot is taken in the virtual environment ◄~306

Read screenshots to provide analysis / suggestions ◄~308

## Fig. 5

Capture a video of the virtual environment ◄~402

Record the unique location IDs of the locations shown in the video and timestamps ◄~404

Embed the array of location IDs and timestamps in the video file ◄~406

Read the embedded data to visualise camera and user positions while video is playing ◄~408

Fig. 6

Europäisches
Patentamt

European
Patent Office

Office européen
des brevets

# EUROPEAN SEARCH REPORT

**Application Number**

EP 23 15 3306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/398158 A1 (MORISHITA KAZUKI [JP] ET AL) 24 December 2020 (2020-12-24) * abstract; figures 5c,11a,11b * * paragraph [0059] * * paragraphs [0089] - [0092] * | 1-15 | INV. A63F13/216 A63F13/35 A63F13/537 A63F13/69 A63F13/795 A63F13/85 |
| X | US 9 649 554 B1 (AKPAN INYANG [US] ET AL) 16 May 2017 (2017-05-16) * abstract; figures 1-3 * * column 10, line 59 - column 12, line 60 * | 1-15 | |
| X | US 2020/030700 A1 (MATTAR MOHAMED MARWAN [US] ET AL) 30 January 2020 (2020-01-30) * abstract * * paragraphs [0031] - [0037] * | 1-15 | |
| X | US 2013/203509 A1 (REED DAVID R [US] ET AL) 8 August 2013 (2013-08-08) * abstract; figures 1-5 * * paragraphs [0029] - [0036] * | 1-15 | **TECHNICAL FIELDS SEARCHED (IPC)** |
| X | US 2010/076970 A1 (BATES CARY L [US] ET AL) 25 March 2010 (2010-03-25) * abstract; figures 1-5 * * paragraphs [0029] - [0037] * | 1-15 | A63F |

The present search report has been drawn up for all claims

| Place of search | Date of completion of the search | Examiner |
|---|---|---|
| The Hague | 23 May 2023 | Tito Martins, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 3306

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | | Publication date |
|---|---|---|---|---|---|
| US 2020398158 | A1 | 24-12-2020 | JP | 6877555 B1 | 26-05-2021 |
| | | | JP | WO2020261336 A1 | 13-09-2021 |
| | | | US | 2020398158 A1 | 24-12-2020 |
| | | | WO | 2020261336 A1 | 30-12-2020 |
| US 9649554 | B1 | 16-05-2017 | US | 9649554 B1 | 16-05-2017 |
| | | | US | 10576374 B1 | 03-03-2020 |
| US 2020030700 | A1 | 30-01-2020 | US | 10369472 B1 | 06-08-2019 |
| | | | US | 2020030700 A1 | 30-01-2020 |
| US 2013203509 | A1 | 08-08-2013 | CN | 104106091 A | 15-10-2014 |
| | | | EP | 2810240 A1 | 10-12-2014 |
| | | | JP | 2015509767 A | 02-04-2015 |
| | | | KR | 20140121471 A | 15-10-2014 |
| | | | US | 2013203509 A1 | 08-08-2013 |
| | | | WO | 2013116805 A1 | 08-08-2013 |
| US 2010076970 | A1 | 25-03-2010 | NONE | | |

EPO FORM P0459

For more details about this annex : see Official Journal of the European Patent Office, No. 12/82